# EUROPÄISCHE PATENTSCHRIFT

(11) **EP 1 829 722 B1**
(45) Veröffentlichungstag und Bekanntmachung des Hinweises auf die Patenterteilung: **13.05.2009**
(21) Anmeldenummer: 07000447.8
(22) Anmeldetag: 10.01.2007
(51) Int. Cl.: B60H 1/34

(54) **Belüftungsvorrichtung**
Ventilation device
Dispositif d'aération

(30) Priorität: 03.03.2006 DE 102006010388
(43) Veröffentlichungstag der Anmeldung: 05.09.2007
(73) Patentinhaber: AURORA Konrad G. Schulz GmbH & Co. KG, 69427 Mudau (DE)
(72) Erfinder: Banschbach, Thomas, 74706 Osterburken (DE); Kern, Ralf, 74731 Walldürn-Rippberg (DE)
(74) Vertreter: Baronetzky, Klaus

(56) Entgegenhaltungen:
- EP-A1- 1 226 991
- DE-A1- 10 355 247

## Beschreibung

Die Erfindung betrifft eine Belüftungsvorrichtung für Fahrzeuge, gemäß dem Oberbegriff von Anspruch 1.

Es sind bereits zahlreiche Belüftungsvorrichtungen für Fahrzeuge, insbesondere für Großraumfahrzeuge wie Omnibusse, bekannt geworden, bei denen Luftdüsen eingesetzt werden, die die von einer zentralen Luftversorgungseinheit bereitgestellte Luft den Versorgungsstellen zuleiten. In vielen Fällen ist es wünschenswert, dass die Fahrgäste des Großraumfahrzeugs je die ihnen zugedachten Düsen verstellen können, und zwar insbesondere hinsichtlich der Luftabgaberichtung, aber auch hinsichtlich der Luftmenge. Beispiele hierfür sind die bekannten Kugelventildüsen, die sowohl ein Verschwenken als auch eine Luftmengenregulierung erlauben.

In manchen Fällen ist es jedoch anstelle dessen wünschenswert, bestimmte Betriebsparameter der Düse aus der Ferne zu steuern. Dies gilt beispielsweise für Düsen, die schlecht erreichbar angeordnet sind, oder deren Luftabgabe nicht von einem Fahrgast, sondern beispielsweise von dem Fahrer des Großraumfahrzeugs gesteuert werden soll.

Zur Fernsteuerung insbesondere der Luftabgaberichtung sind sowohl Bowdenzüge als auch Elektromotoren vorgeschlagen worden. Hierdurch lässt sich je der Schwenkwinkel von Lamellen einstellen. Diese Lösung hat jedoch den Nachteil, dass die zentrale Luftversorgungseinheit, die häufig mindestens einen Wärmetauscher zur Bereitstellung von Warmluft und/oder von gekühlter Luft aufweist, zusätzlichen Platzbedarf für Absperrorgane und Luftmengenregler erfordert. Gerade wenn beispielsweise die Belüftungsvorrichtung als Frontheizer bei beengten Raumverhältnissen realisiert ist, muss der zusätzlich erforderliche Platz durch engere Krümmungsradien der Luftschläuche erkauft werden, was aus strömungstechnischer Sicht ungünstig ist.

Ferner ist bereits eine kompakte Luftsteuerung vorgeschlagen worden, die auch in die Wirkung der zentralen Versorgungseinheit einbezogen werden kann und hierzu Stellmotoren aufweist, die sowohl für die Ausströmrichtung als auch für die Luftmengenversorgung zuständig sind und gesteuert von einem Zentralcomputer einstellbar sind.

Diese Lösung hat sich jedoch nicht bewährt, da sie vergleichsweise aufwändig ist, aber dennoch ein zusätzliches Absperrglied für das Schließen der betreffenden Düse erfordert, was entweder an der Düse oder in der Nähe der zentralen Luftversorgungseinheit angebracht sein kann. Hierbei muss dann noch besondere Sorge getragen werden, dass nicht eine widersprüchliche Stellung zwischen dem Absperrglied und der Luftmengenklappe entsteht.

Die bislang eingesetzten Düsen sind relativ wenig flexibel, so dass für jeden Anwendungsfall eine besondere Düse hergestellt werden muss, also die entsprechenden Lamellen oder sonstigen Luftleitelemente, der Rahmen der Düse und die weiteren Elemente. Gerade bei Großraumfahrzeugen mit vergleichsweise geringen Serien-Stückzahlen ist dies recht aufwändig und erfordert auch eine überbordende Lagerhaltung für die Ersatzteilversorgung.

Bei der gattungsgemäßen DE 103 55 247 ist weiterhin eine Belüftungsvorrichtung der obergebannten Art bekannt, wobei die Klappe zwei Stellelemente aufweist, über welche die Klappe wahlweise elektrisch oder manuell verstellbar ist.

Daher liegt der Erfindung die Aufgabe zugrunde, eine Belüftungsvorrichtung gemäß dem Oberbegriff von Anspruch 1 zu schaffen, die einen vereinfachten Aufbau ermöglicht, aber dennoch besonders flexibel einzusetzen ist.

Diese Aufgabe wird erfindungsgemäß durch Anspruch 1 gelöst. Vorteilhafte Weiterbildungen ergeben sich aus den Unteransprüchen.

Bei der erfindungsgemäßen Belüftungsvorrichtung ist ein motorisch schließbarer Schieber oder eine motorisch schließbare Klappe vorgesehen, die der Luftdüse selbst eng benachbart angeordnet ist und ein vollständiges Schließen der Luftzufuhr auch ferngesteuert erlaubt. Separate Schließorgane an der zentralen Versorgungseinheit können so entfallen. Zudem ist es vorgesehen, dass sich die Ausströmrichtung der Luft in beliebiger Weise über den Lamellen aufweisenden Ausströmer einstellen lässt, und zwar unabhängig davon, welche Stellung der erfindungsgemäße Absperrschieber oder die Absperrklappe hat.

Der erfindungsgemäße Absperrschieber oder die erfindungsgemäße Absperrklappe ist so ausgestaltet, dass die Betätigung wahlweise über den Motor oder ein manuelles Betätigungselement möglich ist. Hierzu ist erfindungsgemäß auf jeder Endseite der Klappe ein entsprechend ausgebildetes Stellelement vorgesehen, das je nach Einsatz der Luftdüse mit dem manuellen Betätigungselement oder dem Motor verbunden ist oder nicht. Beispielsweise kann die Absperrklappe als Spritzgussteil ausgebildet sein, und auf der dem Motor abgewandten Seite kann ein kleiner Zapfen ausgebildet sein, der bei motorischer Bedienung der Sperrklappe frei bleibt und lediglich dann zum Einsatz gelangt, wenn ein manuelles Betätigungselement für die Absperrklappe, beispielsweise neben dem Luftauslass der Düse, vorgesehen ist.

Ferner kann die Absperrklappe auf der Motorseite eine Kupplung aufweisen, die für den Eingriff einer Antriebswelle des Stellmotors bestimmt ist. Die Kupplung tritt dann in Funktion, wenn der Motor eingesetzt wird, und bleibt im übrigen funktionslos.

Erfindungsgemäß besonders günstig ist in diesem Zusammenhang der modulare Aufbau der Luftdüse. Beispielsweise können für den Rahmen die gleichen Spritzgusswerkzeuge verwendet werden, unabhängig davon, ob eine manuelle oder elektrische Ansteuerung der Absperrklappe erwünscht ist. Für die manuelle Ansteuerung ist in an sich bekannter Weise ein Rändelrad an einem Achsstummel des Rahmens derart gelagert, dass er nach vorne vorsteht, durch einen entsprechend ausgebildeten Schlitz der Blende, die den Rahmen vorne abdeckt, sich partiell hindurcherstreckend. Das Rändelrad steht über einen Betätigungshebel mit dem manuellen Stellelement der Absperrklappe in Verbindung, das beispielsweise als Zapfen ausgebildet ist und sich parallel zur Drehachse der Absperrklappe, jedoch von dieser beabstandet, nach außen erstreckt.

Bei ausschließlich elektromotorischer Betätigung der Absperrklappe entfällt kurzerhand das Rändelrad und der Hebel, so dass das manuelle Stellelement keine Funktion hat. Die Blende ist bei dieser Ausgestaltung dann als durchgehende Blende ausgebildet, die den Schlitz im Rahmen für das vorstehend genannte Rändelrad abdeckt. Hingegen ist bei dieser Verwendung der erfindungsgemäßen Luftdüse das motorische Stellelement der Absperrklappe in Funktion. Dieses kann beispielsweise als unrunde Ausnehmung koaxial zur Drehachse der Absperrklappe ausgebildet sein und für den Eingriff einer entsprechenden unrunden Welle, beispielsweise einer Welle mit einer Abflachung, des Stellmotors passend vorgesehen sein. Anstelle dessen kann auch eine Kupplung oder eine beliebige andere geeignete Ausgestaltung für die Drehmomentübertragung zwischen Stellmotor und Absperrklappe realisiert sein.

In einer modifizierten, besonderen Ausgestaltung können auch beide Stellelemente in Funktion sein, wobei dann bevorzugt für den Stellmotor eine zusätzliche Rutschkupplung realisiert ist, so dass die manuelle Betätigung Vorrang hat.

Besonders günstig ist es, dass die erfindungsgemäße Luftdüse als Luftausströmer für eine Fahrzeugscheibe, aber auch als sogenannter Mannauströmer oder als Belüftungsdüse für den Fußraum, der häufig für die manuelle Betätigung ungeeignet ist, aber auch für den Beifahrer des Großraumfahrzeugs, oder auch für eine Kabine realisiert werden kann. Durch die vollständige Trennung der Sperrfunktion für die Luft von der Einstellung der Strömungsrichtung lässt sich unabhängig von dem Stellwinkel der Lamellen die Luftdüse sperren und öffnen. Hierdurch ergibt sich auch ein großer Schwenkbereich für die Luftströmung, beispielsweise horizontal über etwa 60° und vertikal über mehr als 100° .

Auch der Anschlussbereich für den Luftschlauch der erfindungsgemäßen Luftdüse ist modular ausgebildet. Durch einen Adapter lässt sich beispielsweise ohne weiteres eine 90°-Umlenkung kompakt realisieren, wobei dann zweckmäßig der Adapter zur Bereitstellung einer möglichst geringen Einbautiefe den Rahmen partiell übergreift und dort befestigt ist.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: Ein Schnitt durch eine Ausführungsform einer erfindungsgemäßen Luftdüse bei geöffneter Stellung der Absperrklappe;
- Fig. 2: Die Ausführungsform gemäß Fig. 1, jedoch bei geöffneter Absperrklappe; und
- Fig. 3: eine Stirnansicht der Ausführungsform gemäß Fig.1 und 2.

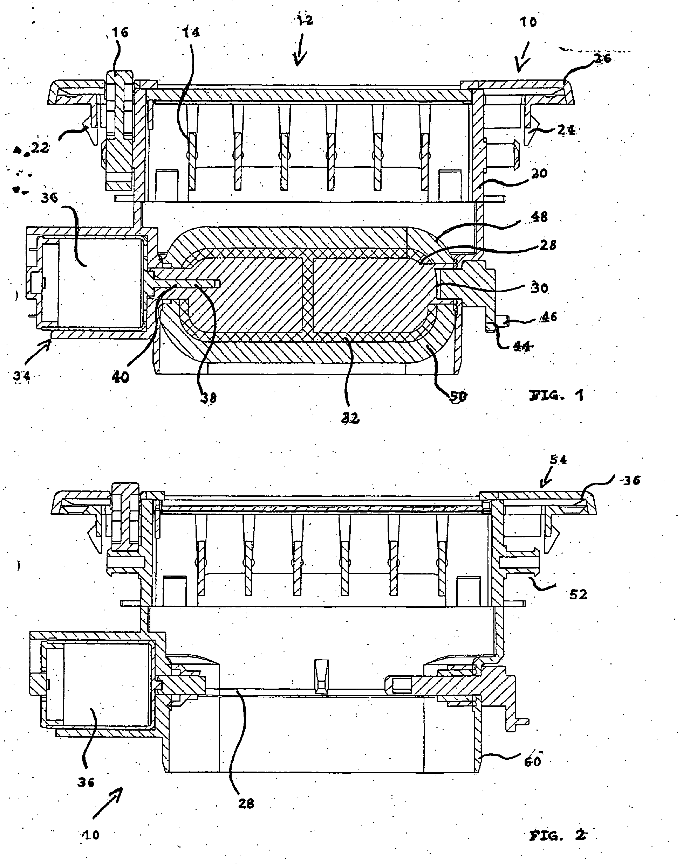

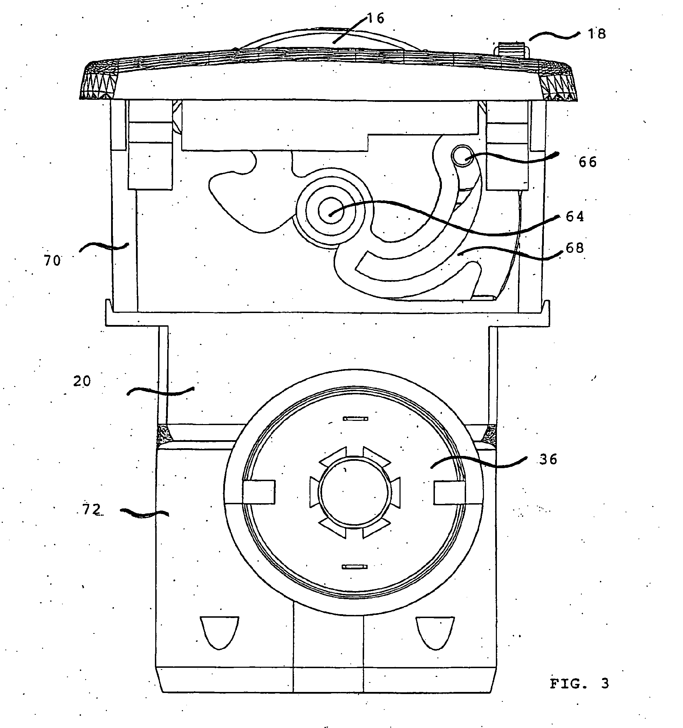

Die in Fig. 1 dargestellte Luftdüse 10 ist Teil einer Belüftungsvorrichtung für ein Fahrzeug, in der sie mehrfach vorgesehen ist. Die Luftdüse 10 weist einen Ausströmer 12 mit Lamellen 14 auf, die über eine Rändelrad 18, das aus Fig. 3 ersichtlich ist, manuell betätigbar sind. Zusätzlich sind aus Fig. 1 nicht. ersichtliche Lamellen vorgesehen, die sich quer zu den Lamellen 14 erstrecken und über ein weiteres Rändelrad 16 betätigbar sind. Mit den Rändelrädern 16 und 18 lässt sich der Ausströmwinkel des Ausströmers 12 in weiten Bereichen einstellen.

Die Luftdüse 10 weist einen Rahmen 20 auf, der unter anderem die Lamellen 14 und die Rändelräder 16 und 18 trägt. Er ist in an sich bekannter Weise bündig zur Montageoberfläche vorgesehen und passt in einen Karosserieausschnitt. Über Rastzungen 22 und 24 lässt sich der Rahmen 20 an den betreffenden Karosserieausschnitt einschnappen. An der Vorderseite ist er zudem von einer Blende 26 abgedeckt, die eine Ausnehmung für den Ausströmer 12 belässt.

Der Rahmen 20 trägt überdies stromauf eine Absperrklappe 28, die um eine Drehachse 30 in dem Rahmen 20 schwenkbar gelagert ist. Die Absperrklappe 28 lässt sich in an sich bekannter Weise um etwa 90° verschwenken, zwischen der in Fig. 1 dargestellten offenen Stellung und der in Fig. 2 dargestellten geschlossenen Stellung. Sie weist bevorzugt eine umlaufende Dichtlippe auf, um eine vollständige Abdichtung zu gewährleisten. Zusätzlich ist eine Verstärkungsrippe 32 eingearbeitet, die es ermöglicht, mit einer vergleichsweise dünnen Materialstärke eine ausreichende Festigkeit bereitzustellen.

Der Rahmen 20 weist ferner eine Motorausnehmung 34 auf. In der Motorausnehmung 34 ist ein elektrischer Stellmotor 36 geschützt und zu den Außenabmessungen des Motors 36 passend aufnehmbar. Der Motor 36 weist einen abgeflachten Wellenstummel 38 auf. Der Wellenstummel 38 erstreckt sich koaxial zur Drehachse 30 der Absperrklappe 28. Er greift in ein Stellelement 40 der Absperrklappe 28 ein, das als unrunde und zum Wellenstummel 38 passende Ausnehmung ausgebildet ist. Auf diese Weise lässt sich über den Antrieb des Stellmotors 36 die Absperrklappe 28 in beliebiger Weise verstellen.

Ferner weist die Absperrklappe 28 ein manuelles Stellelement 44 auf. Das manuelle Stellelement 44 erstreckt sich dem Stellelement 40 gegenüberliegend, und ebenfalls durch die Drehachse 30 der Absperrklappe 28 hindurch. Es ist in dem dargestellten Ausführungsbeispiel als separates Bauteil mit einem gegenüber der. Drehachse 30 außermittigen Zapfen 46 ausgebildet. Durch die Einleitung eines Drehmoments an dem Zapfen 46 lässt sich die Absperrklappe 28 - alternativ zur Betätigung durch den Motor 36 - ebenfalls verschwenken.

In dem dargestellten Ausführungsbeispiel ist die Absperrklappe 28 asymetrisch ausgebildet. Sie weist einen etwas kürzeren Flügel 48 und einen etwas längeren Flügel 50 auf, wobei sich der Zapfen 46 in den Bereich des längeren Flügels 50 erstreckt. Diese Ausgestaltung hat bauliche Vorteile und ermöglicht einen kompaktere Anordnung.

Die in den Figuren dargestellte Ausführungsform ermöglicht es, anstelle der motorischen Betätigung der Absperrklappe 28 auch eine manuelle Betätigung vorzusehen. Hierzu weist der Rahmen einen Lagerzapfen 52 auf. Der Lagerzapfen 52 ist für die Aufnahme eines weiteren, hier nicht dargestellten, Rändelrads bestimmt, das die Blende 26 in einem Bereich 54 durchtritt. Für die Realisierung dieser Ausgestaltung ist dementsprechend eine modifizierte Blende 26 vorgesehen, die eine entsprechende Ausnehmung aufweist. Eine derartige Blende kann bei Bedarf auch durch ein Stanzwerkzeug realisiert werden, so dass kein zusätzliches Spritzgusswerkzeug erforderlich ist. Alternativ lässt sich eine derartige Ausnehmung auch durch ein entsprechendes Einlegestück in die Spritzgussform realisieren.

Zusätzlich ist für die manuelle Betätigung ein Betätigungshebel vorgesehen, der außermittig an dem nicht dargestellten Rändelrad angreift und den Zapfen 46 umgreift. Durch diese Lösung lässt sich eine manuelle Betätigung der Absperrklappe sicherstellen.

Aus Fig. 2 ist ersichtlich, dass sich die Absperrklappe 28 auch in der Zeichnungsebene erstrecken kann, so dass sie dann den Luftstrom durch die erfindungsgemäße Luftdüse 10 absperrt. Der Rahmen 20 weist unterhalb der Stellelemente einen Flansch 60 auf, der für den Anschluß eines Adapters bestimmt ist. Der Adapter dient der Luftstromumformung zwischen dem meist runden Luftschlauch und dem im Wesentlichen rechteckigen Querschnitt der Luftdüse 10.

Aus Fig. 3 ist ersichtlich, dass auch das Rändelrad 16 schwenkbar gelagert ist. Hierzu ist ein weiterer Lagerzapfen 64 vorgesehen, und über einen Mitnehmer 66 mit einer Kulisse 68 lässt sich mittels des Rändelrads 16 die Mehrfachanordnung von Lamellen betätigen, während über das Rändelrad 18, das ebenfalls an sich bekannte und entsprechende Mitnehmer aufweist, die Lamellen betätigbar sind.

Aus Fig. 3 ist auch die etwas außermittige Anordnung des Motors 36 ersichtlich. Diese ist durch die asymetrische Ausgestaltung der Absperrklappe 28 bedingt.

Aus Fig. 3 ist auch ersichtlich, dass der Rahmen 20 zweiteilig ausgebildet sein kann. Der Ausströmer-Rahmen 70 ist die Montagebasis, während der Sperrklappen-Rahmen 72 je nach Ausgestaltung entweder eine gerade oder eine abgewinkelte Luftzuführung ermöglicht. In Fig. 3 ist die gerade Luftzuführung dargestellt.

## Patentansprüche

1. Belüftungsvorrichtung für Fahrzeuge, mit einer Luftdüse, die einen insbesondere verstellbaren Ausströmer (12) aufweist und über einen Schieber oder eine Klappe (28) verschließbar ist, wobei ein manuelles Betätigungsorgan dem Ausströmer (12) benachbart an der Vorderseite der Luftdüse angeordnet ist, wobei der Schieber oder die Klappe zwei Stellelemente (40, 44) aufweist, über welche der Schieber oder die Klappe (28) wahlweise elektrisch oder manuell verstellbar ist, **dadurch gekennzeichnet, dass** die zwei Stellelemente (40,44) auf gegenüberliegenden Seiten des Schiebers oder der Klappe (28) angeordnet sind

2. Belüftungsvorrichtung nach Anspruch 1,
**dadurch gekennzeichnet, dass** das ein Stellelement (40) und das zweite Stellelement (44) je der Schwenkachse des Schiebers oder der Klappe (28) benachbart, jedoch außermittig, angeordnet sind.

3. Belüftungsvorrichtung nach einem der vorhergehenden Ansprüche,
**dadurch gekennzeichnet, dass** die Luftdüse (10) einen Rahmen (20) aufweist, der für den Anbau eines elektrischen Motors (36) vorbereitet ist.

4. Belüftungsvorrichtung nach einem der vorhergehenden Ansprüche,
**dadurch gekennzeichnet, dass** das eine Stellelement (40) als eine Ausnehmung ausgebildet ist, in welche ein Wellenstummel (38) des Motors (36) eingreift.

5. Belüftungsvorrichtung nach einem der Ansprüche 1 bis 3,
**dadurch gekennzeichnet, dass** das zweite Stellelement (44) als separates Bauteil mit einem außermittigen Zapfen (46) ausgebildet ist.

6. Belüftungsvorrichtung nach einem der vorhergehenden Ansprüche,
**dadurch gekennzeichnet, dass** eine Blende (26) auf dem Rahmen (20) angeordnet ist, die Ausnehmungen (34) für Betätigungselemente aufweist.

7. Belüftungsvorrichtung nach einem der vorhergehenden Ansprüche,
**dadurch gekennzeichnet, dass** der Ausströmer (12) Lamellen (14) aufweist, die in zwei voneinander beabstandeten Ebenen verstellbar gelagert sind, wobei die Lamellen (14) jeder Ausrichtung je über ein Stellrad gemeinsam verstellbar sind.

8. Belüftungsvorrichtung nach einem der vorhergehenden Ansprüche,
**dadurch gekennzeichnet, dass** der Rahmen (20) als Schnapprahmen für das Einschnappen in eine Karosserieöffnung ausgebildet ist und insbesondere Rastzungen für die Lagerung an der Karosserieöffnung aufweist, und dass der Rahmen (20) von einer Blende (26) abgedeckt, die eine Ausnehmung (34) für den Ausströmer (12) aufweist.

9. Belüftungsvorrichtung nach einem der vorhergehenden Ansprüche,
**dadurch gekennzeichnet, dass** die Klappe (28) sich asymmetrisch um ihre Längsachse erstreckt, wobei der längere Flügel (50) in geöffnetem Zustand der Klappe (28) gegen die Strömungsrichtung der Luft weist.

10. Belüftungsvorrichtung nach einem der vorhergehenden Ansprüche,
**dadurch gekennzeichnet, dass** an den Rahmen (20) ein Schlauchstutzen ansetzbar ist, der eine Zuführung der Zuluft zur Luftdüse (10) erlaubt.

11. Luftdüse für eine Belüftungsvorrichtung gemäß einem der vorhergehenden Ansprüche.

## Claims

1. Ventilation device for vehicles, with an air duct, which comprises a preferably adjustable outlet (12) and can be closed by means of a slider or a flap (28), where a manual actuating mechanism is arranged adjacent to the outlet (12) at the front of the air duct, where the slider or the flap comprises two control elements (40, 44), by means of which the slider or the flap (28) is adjustable electrically or alternatively manually, **characterised in that** the two control elements (40, 44) are arranged on opposite sides of the slider or the flap (28).

2. Ventilation device according to claim 1, **characterised in that** the first control element (40) and the second control element (44) are arranged adjacent to the swivelling axis of the slider or the flap (28), however off centre.

3. Ventilation device according to one of the preceding claims, **characterised in that** the air duct (10) comprises a frame (20), which is prepared for attaching an electrical motor (36).

4. Ventilation device according to one of the preceding claims, **characterised in that** the first control element (40) is designed as a recess, in which a shaft end (38) of the motor (36) engages.

5. Ventilation device according to one of the claims 1 to 3, **characterised in that** the second control element (44) is designed as separate component with an off centre tappet (46).

6. Ventilation device according to one of the preceding claims, **characterised in that** a cover (26) is arranged on the frame (20), which comprises recesses (34) for operating elements.

7. Ventilation device according to one of the preceding claims, **characterised in that** the outlet (12) comprises lamellas (14), which are adjustably positioned on two levels at a distance from each other, where the lamellas (14) are commonly adjustable to each orientation each by means of an adjusting wheel.

8. Ventilation device according to one of the preceding claims, **characterised in that** the frame (20) is designed as snapping frame for snapping into an opening in the bodywork and in particular comprises locking tongues for mounting in the opening in the bodywork and that the frame (20) is covered by a cover (26), which comprises a recess (34) for the outlet (12).

9. Ventilation device according to one of the preceding claims,
**characterised in that** the flap (28) extends asymmetrically around its longitudinal axis, where with the flap (28) in an open state the longer win (50) points against the direction of the airflow.

10. Ventilation device according to one of the preceding claims, **characterised in that** a hose flange is capable of being put onto frame (20), which permits the supply of air to the air duct (10).

11. Air duct for a ventilation device according to one of the preceding claims.

## Revendications

1. Dispositif de ventilation pour véhicules, avec un conduit d'air, qui présente un débouché (12), de préférence réglable, et qui est verrouillable au moyen d'un glisseur ou d'une trappe (28), où un organe de commande manuel est disposé sur la face avant du conduit d'air, contigu au débouché (12), où le glisseur ou la trappe présente deux éléments de commande (40, 44), au moyen desquels le glisseur ou la trappe (28) est réglable optionnellement électriquement ou manuellement, **caractérisé en ce que** les deux éléments de commande (40, 44) soient arrangés sur des faces opposées du glisseur ou de la trappe (28).

2. Le dispositif de ventilation selon la revendication 1, **caractérisée en ce que** le premier élément de commande (40) et le deuxième élément de commande (44) soient arrangés à côté de l'axe de pivotement du glisseur ou de la trappe (28), toutefois excentré.

3. Le dispositif de ventilation selon une des revendication précédentes, **caractérisé en ce que** le conduit d'air (10) présente un cadre (20), qui est préparé pour attacher un moteur électrique (36).

4. Le dispositif de ventilation selon une des revendications précédentes, **caractérisé en ce que** le premier élément de commande (40) soit conçu comme cavité, dans laquelle une extrémité d'arbre (38) du moteur (36) s'engage.

5. Le dispositif de ventilation selon une des revendications 1 à 3, **caractérisé en ce que** le deuxième élément de commande (44) soit conçu en tant que composant séparé avec un tourillon excentré (46).

6. Le dispositif de ventilation selon une des revendications précédentes, **caractérisé en ce qu'**une couverture (26) soit disposé sur le cadre (20), qui présente les cavités (34) pour les éléments de fonctionnement.

7. Le dispositif de ventilation selon une des revendications précédentes, **caractérisé en ce que** la sortie (12) présente les lamelles (14), qui soient logées de façon réglable à deux niveaux distancés entre eux, où les lamelles (14) soient réglables en commun dans chaque orientation chacune à l'aide d'une roue d'ajustement.

8. Le dispositif de ventilation selon une des revendications précédentes, **caractérisé en ce que** le cadre (20) soit conçu comme cadre à enclenchement pour s'enclencher dans une ouverture dans la carrosserie et présente de préférence des langues crantées pour le montage dans l'ouverture dans la carrosserie et que le cadre (20) soit couvert par un panneau (26), qui présente une cavité (34) pour la sortie (12).

9. Le dispositif de ventilation selon une des revendications précédentes, **caractérisé en ce que** la trappe (28) s'étende asymétriquement autour de son axe longitudinal, où avec la trappe (28) à l'état ouvert, l'aile la plus longue (50) se dirige contre la direction du flux d'air.

10. Le dispositif de ventilation selon une des revendications précédentes, **caractérisé en ce qu'**un manchon de tuyau soit capable d'être fixé sur le cadre (20), qui permet l'approvisionnement d'air à la buse d'air (10).

11. Buse d'air pour un dispositif de ventilation selon une des revendications précédentes.
